# EUROPEAN PATENT APPLICATION

(11) **EP 4 478 029 A1**
(43) Date of publication of application: **18.12.2024**
(21) Application number: 24180407.9
(22) Date of filing: 06.06.2024
(51) Int. Cl.: G01N 21/3504, G01N 21/61

(54) **OPTICAL GAS SENSOR DEVICE, GAS SENSING METHOD AND PROGRAM**

(30) Priority: 15.06.2023 JP 2023098253
(71) Applicant: MITSUMI ELECTRIC CO., LTD., Tama-Shi, Tokyo 206-8567 (JP)
(72) Inventor: SASAKI, Shoko, Tokyo, 206-8567 (JP)
(74) Representative: Epping - Hermann - Fischer

(57) **Abstract**

An optical gas sensor device includes the following. A light source emits an infrared ray to a gas as a detection target. An optical filter transmits the infrared ray with a wavelength corresponding to an absorption wavelength of the gas as the detection target. A light receiver generates a detection signal by detecting the infrared ray incident through the optical filter. A substrate is provided, and the light source and the light receiver are mounted on the substrate. A signal processor intermittently drives and controls on and off of the light source, and calculates a gas concentration value of the gas as the detection target from a difference value acquired by subtracting a detection value of the detection signal when the light source is off from the detection value of the detection signal when the light source is on.

## Description

### TECHNICAL FIELD

The present invention relates to an optical gas sensor device, a gas sensing method and a program.

### DESCRIPTION OF RELATED ART

Conventionally, gas sensors using a non-dispersive infrared (NDIR) absorption method are known. NDIR gas sensors use the property that many gases each absorb a specific infrared wavelength. When infrared rays are emitted to the gas as the detection target, the NDIR gas sensor detects which wavelength is absorbed and how much. With this, the concentration in the gas as the detection target is measured. For example, there is a gas sensor including a light emitter and a light receiver for infrared rays, and such gas sensor detects concentration of a gas to be detected on an optical path of the light emitter and the light receiver.

For example, a non-dispersive infrared gas sensor including a light source arranged in a barrel in which the gas to be measured is introduced, and an infrared wavelength selection filter and an infrared detector disposed opposite to the light source on a separate block from the barrel is known (see JP 2015-135258). Such non-dispersive infrared gas sensor periodically switches the light source to a first set light amount and a second set light amount smaller than the first set light amount alternately. The non-dispersive infrared gas sensor takes a difference between an average value of two consecutive detection signals of the first set light amount, and the detection signal of the second set light amount between the above two consecutive detection signals. By converting the above to a gas concentration, the non-dispersive infrared gas sensor suppresses a decrease in the measurement accuracy of the gas concentration due to a change in a measurement environment.

In the gas sensor, from the viewpoint of miniaturization and simplification of the device configuration, there is a request for mounting the light source and the light receiver on the same substrate. In this configuration, heat from the light source is transmitted to the light receiver through the substrate, and the effect on the detection signal of the gas in the light receiver is large. There is a request to suppress the variation of the gas concentration value calculated from the detection signal of the gas based on the change in the substrate temperature.

### SUMMARY OF THE INVENTION

An object of the present invention is to suppress variation of a gas concentration value based on a change in a substrate temperature.

To achieve the abovementioned object, according to an aspect of the present invention, the optical gas sensor device according to the present invention includes: a light source that emits an infrared ray to a gas as a detection target; an optical filter that transmits the infrared ray with a wavelength corresponding to an absorption wavelength of the gas as the detection target; a light receiver that generates a detection signal by detecting the infrared ray incident through the optical filter; a substrate on which the light source and the light receiver are mounted; and a signal processor that intermittently drives and controls on and off of the light source, and calculates a gas concentration value of the gas as the detection target from a difference value acquired by subtracting a detection value of the detection signal when the light source is off from the detection value of the detection signal when the light source is on.

According to another aspect, a gas sensing method used in an optical gas sensor device including, a light source that emits an infrared ray to a gas as a detection target; an optical filter that transmits the infrared ray with a wavelength corresponding to an absorption wavelength of the gas as the detection target; a light receiver that generates a detection signal by detecting the infrared ray incident through the optical filter; and a substrate on which the light source and the light receiver are mounted, the gas sensing method including: signal processing that intermittently drives and controls on and off of the light source, and calculates a gas concentration value of the gas as the detection target from a difference value acquired by subtracting a detection value of the detection signal when the light source is off from the detection value of the detection signal when the light source is on.

According to another aspect, a program for controlling a computer in an optical gas sensor device including, a light source that emits an infrared ray to a gas as a detection target; an optical filter that transmits the infrared ray with a wavelength corresponding to an absorption wavelength of the gas as the detection target; a light receiver that generates a detection signal by detecting the infrared ray incident through the optical filter; and a substrate on which the light source and the light receiver are mounted, the program controlling the computer to function as, a signal processor that intermittently drives and controls on and off of the light source, and calculates a gas concentration value of the gas as the detection target from a difference value acquired by subtracting a detection value of the detection signal when the light source is off from the detection value of the detection signal when the light source is on.

### BRIEF DESCRIPTION OF DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG. 1 is a schematic diagram of an optical gas sensor device according to an embodiment of the present invention;
FIG. 2 is a perspective view of the optical gas sensor device;
FIG. 3 is a perspective view of a light source;
FIG. 4 is a diagram illustrating a circuit configuration of an optical gas sensor device and an apparatus;
FIG. 5 is a flowchart illustrating a state signal generation process;
FIG. 6 is a flowchart illustrating a light source intermittent drive control process;
FIG. 7 is a flowchart illustrating a measurement loop process of the state signal generation process shown in FIG. 5;
FIG. 8 is a diagram illustrating a waveform of a state signal;
FIG. 9 is a diagram illustrating various timings of an on/off waveform of the light source;
FIG. 10A is a diagram showing amount of time characteristics of a detection value when the light source is turned on;
FIG. 10B is a diagram showing amount of time characteristics of a detection value when the light source is turned off; and
FIG. 11 is a diagram showing amount of time characteristics of a difference value of a detection value.

### DETAILED DESCRIPTION

Hereinafter, embodiments of the present invention will be described in detail with reference to the accompanying drawings. However, the scope of the present invention is not limited to the embodiments or illustrated examples.

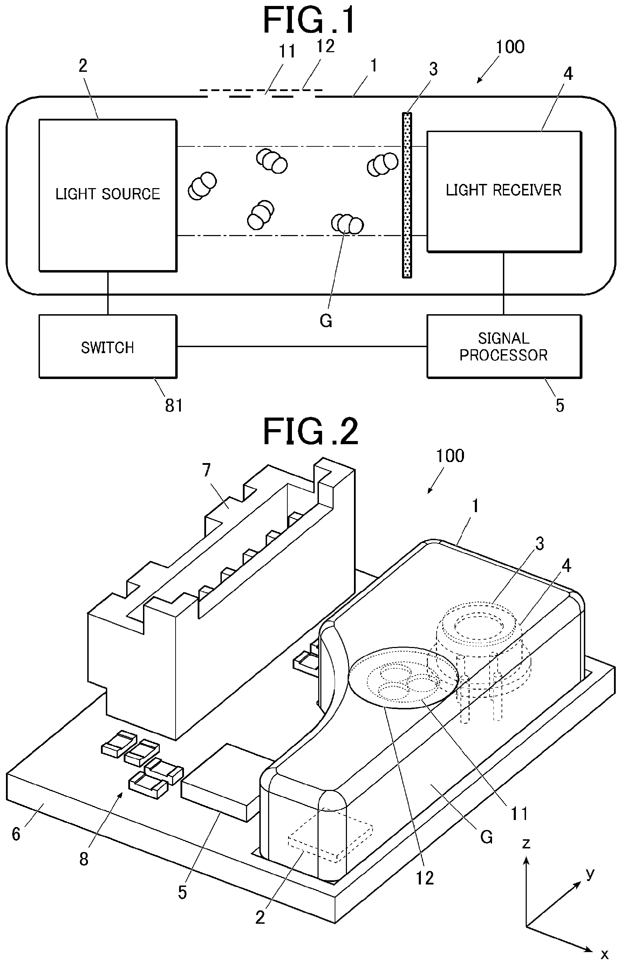

First, a schematic configuration of an optical gas sensor device 100 according to the present embodiment will be described with reference to FIG. 1. FIG. 1 is a schematic diagram of the optical gas sensor device 100 according to the present embodiment.

As shown in FIG. 1, the optical gas sensor device 100 of the present embodiment is a gas sensor of the NDIR system, and includes an optical cover 1, a light source 2, an optical filter 3, a light receiver 4, a signal processor 5, and a switch 81. The optical gas sensor device 100 emits infrared rays from the light source 2, and through the optical path in the optical cover 1, the optical gas sensor device 100 emits the infrared rays to a gas G as a detection target (measurement target) in the optical cover 1. The molecules of the gas G as the detection target present in the optical path absorb the infrared rays and the amount of light reaching the light receiver 4 is reduced. The optical gas sensor device 100 detects the infrared rays partially absorbed by the gas G as the detection target by the light receiver 4 via the optical filter 3. The detection signal is processed by the signal processor 5, and the concentration of the gas G of the detection target is detected (measured) and output. The switch 81 is a switch for turning on and off the light emission of the light source 2, and is included in a circuit element 8 to be described later. When the gas is detected, the signal processor 5 intermittently turns the light source 2 on and off through the switch 81. The optical cover 1 has a gas introduction port 11 as a gas introduction section that is an inlet/outlet for the gas G as the detection target. In order to prevent foreign matter entering from the outside, a contamination filter 12 is attached to the gas introduction port 11. The contamination filter 12 is, for example, a metal mesh filter or a porous film made of resin.

Specifically, the optical gas sensor device 100 filters infrared rays emitted from the light source 2 to the gas G as the detection target with the optical filter 3 and receives the light with the light receiver 4. The optical filter 3 is disposed at a position in the vicinity of the light receiver 4 on the optical path upstream of the light receiver 4. According to such configuration, as compared with the configuration of emitting the gas G as the detection target after filtering the infrared rays emitted from the light source 2 by an optical filter, it is sufficient to filter by a light receiving surface of a light receiver 4. Therefore, the area of the optical filter 3 can be reduced, and it is possible to achieve a reduction in cost. Furthermore, the infrared rays before filtering emitted from other than the light source 2 are not received, and the signal-to-noise ratio (SN ratio) as a sensor is improved. However, the optical gas sensor device 100 may filter infrared rays emitted from the light source 2 with the optical filter 3 and may emit the infrared rays to the gas G as the detection target. According to the present embodiment, regarding the infrared rays received by the receiver 4 through the optical filter 3, the optical path is designed not only to directly reach from the optical path 2, but the optical path is also designed so that the infrared rays reach the destination reflected by the inner surface of the optical cover 1. Preferably, the inner surface of the optical cover 1 has a higher reflectance so that utilization efficiency of the light (infrared rays) become higher.

The optical gas sensor device 100 detects CFC substitute refrigerant which is a refrigerant of air conditioner as the gas G as the detection target. CFC substitutes are refrigerants for synthetic compounds (gases), which are industrially used as substitutes for specified CFCs (chlorofluorocarbons). Because a CFC refrigerant has a high ozone depletion potential and causes depletion of the earth's ozone layer, a hydrochlorofluorocarbon (HCFC) refrigerant with a low ozone depletion potential started to be used as a substitute. Further, in developed countries, the conversion from the HCFC refrigerant to an HFC refrigerant (R410A), which has an ozone depletion potential of 0, is spreading.

The CFC refrigerant, the HCFC refrigerant, and the HFC refrigerant have high global warming potential and are known to be greenhouse gases that cause global warming. Therefore, the switch from the HFC refrigerant (R410A) to the HFC refrigerant (R32) with lower global warming potential is being considered. According to the present embodiment, for example, as the gas G as the detection target, R32 as the CFC based refrigerant is to be detected.

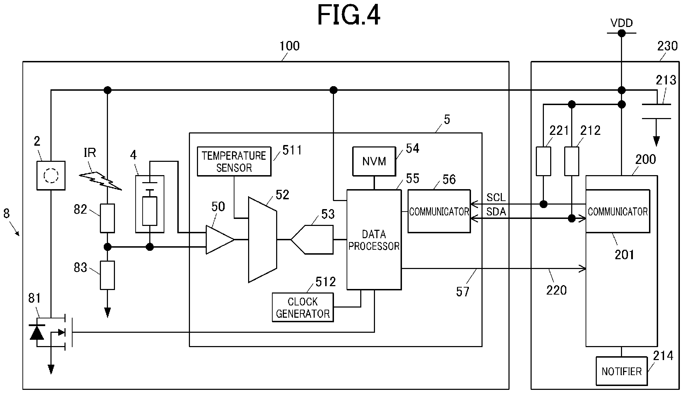

The optical gas sensor device 100 outputs various state signals based on the gas concentration value of the detected gas G to an information processor of an apparatus that performs processing based on a state of the optical gas sensor device 100. For example, the information processor is a later-described MCU (Micro-Controller Unit) 200 shown in FIG. 4. The state signal may be, for example, a fault signal, an alarm signal, or a monitoring signal (normal signal). The fault signal indicates a fault state of the optical gas sensor device 100. The alarm signal indicates that the concentration of the detected gas G is an abnormal state (alarm condition) that requires an alarm. The monitoring signal indicates that the concentration of the detected gas G is in a normal state. If the apparatus is an alarm, in response to the various signals received from the optical gas sensor device 100, various alarms (e.g., an alarm showing the fault of the optical gas sensor device 100 based on the fault signal, an alarm showing the abnormal state of the concentration of the detected gas G based on the alarm signal) are notified. The apparatus may be an apparatus 230 including the optical gas sensor device 100 and the MCU 200 (FIG. 4), or may be a separate apparatus from the optical gas sensor device 100 (external apparatus including the MCU 200 (e.g., the apparatus 230 in FIG. 4)). The above apparatus includes room air conditioners, air conditioners for stores and offices, and multi-air conditioners for buildings.

However, the gas G as the detection target is not limited to R32, and may be other CFC based refrigerants. Further, the gas G as the detection target is not limited to the CFC based refrigerants, and may be, carbon dioxide, carbon monoxide, propane, methane, butane, ammonia, oxygen disulfide, nitrogen dioxide, nitric oxide, ozone, sulfur hexafluoride, ethylene and the like.

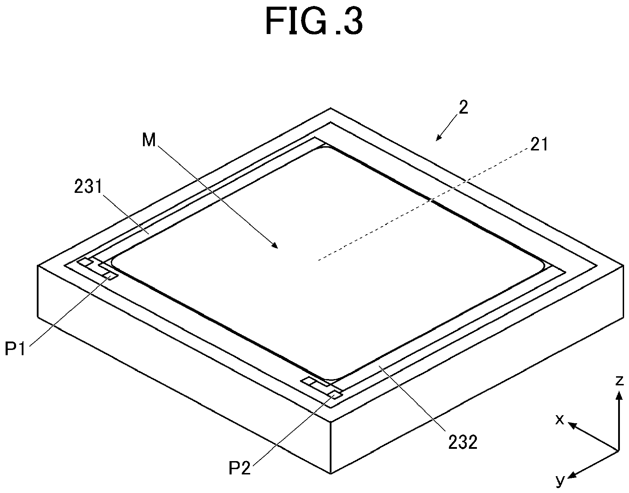

Next, a specific configuration of the optical gas sensor device 100 will be described with reference to FIGS. 2 and 3. FIG. 2 is a perspective view of the optical gas sensor device 100. FIG. 3 is a perspective view of the light source 2.

As shown in FIG. 2, specifically, the optical gas sensor device 100 includes the optical cover 1, the light source 2, the optical filter 3, the light receiver 4, the signal processor 5, a substrate 6, a connector 7, and the circuit element 8. Further, in FIG. 2, the x-axis, y-axis, and z-axis are illustrated. These three axes are the same in FIG. 3.

The optical cover 1 is a cover mounted on the surface of the +z side of the substrate 6, and covers (includes) the light source 2, the optical filter 3 and the light receiver 4 so as to form a space capable of storing the gas G as the detection target inside. The optical cover 1 is the cover to guide the gas G as the detection target in and out of the space through the gas introduction port 11. A base of the optical cover 1 is made of resin, for example, and has a plurality of flat or curved inner surfaces. The inner surface of the base of the optical cover 1 is covered with an infrared reflective film. In this embodiment, gold is used as the infrared reflective film, but the material is not limited to this. Silver, aluminum, or a dielectric multilayer film may be used as the infrared reflective film. Further, as necessary, a protective film such as silicon oxide or silicon nitride may be formed on the infrared reflective film in order to prevent corrosion of a metal film of the infrared reflective film. As a method for forming the infrared reflective film and the protective film, a plating method, a sputtering method, a vacuum evaporation method, etc. can be used.

The optical cover 1 plays a role as the optical path to efficiently guide the infrared rays from the light source 2 to the light receiver 4 by reflecting the infrared rays emitted from the light source 2 with an infrared reflecting film so that at least some of the reflected light reaches the light receiver 4 via the optical filter 3. Note that the shape, size, and position of the gas introduction port 11 for the gas G on the optical cover 1 shown in FIG. 2 are merely examples, and the features are not limited to the above.

As shown in FIG. 3, the light source 2 is a MEMS (Micro Electro Mechanical Systems) type light source mounted on an upper surface (+z side of the surface) of the substrate 6, and for example, membrane M of a membrane structure is formed on the light source 2. The light source 2 includes an electrode 231 and a pad P1 provided in the +x direction side, and an electrode 232 and a pad P2 provided in the -x direction side.

The light source 2 includes as a membrane M provided on the Si substrate the following layered structure, specifically, from the -z direction side to the +z direction side, for example, a light source layer support layer, a light source layer 21, an electrode support layer, and a protective layer (both not shown). The light source layer support layer has from the -z direction to the +z direction, for example, a silicon oxide film, a silicon nitride film, and a HLD (High temperature Low pressure Dielectric layer) layer. The light source layer 21 is a thin film heater as a light source (metal) layer (light emitting layer) emitting infrared rays, for example, made of MoSi2. When the membrane M is heated by energization, the light source layer emits infrared rays having an intensity and wavelength dependence depending on surface temperature and surface emissivity. For example, the electrode support layer has an insulator layer of two layers, from the -z direction side to the +z direction side and supports the electrode. The protective layer is a protective layer made of an insulator and is to be the top surface.

The light source layer 21 is electrically connected to the electrodes 231 and 232. The pad P1 is a pad for wire bonding and is electrically connected to the electrode 231. The pad P2 is a pad for wire bonding and is electrically connected to the electrode 232. The pads P1 and P2 are bonded by wire bonding to a terminal of a wiring pattern on the substrate 6, the light source layer 21 is energized by the application of a voltage, and infrared rays are emitted.

The light source 2 as the MEMS type light source is small and has a low profile, and it is possible to realize miniaturization as a sensor module. Further, the light source 2 as a MEMS type light source has features such as long life, low power consumption, short amount of response time, etc., and it is possible to reduce the power consumption of the sensor module as a whole. The short amount of response time of the MEMS type light source makes it possible to shorten the amount of standby time after energization when intermittent driving is performed, thereby reducing average power consumption.

Moreover, the light source 2 as the MEMS type light source can directly utilize the emitted light from the surface of a high-temperature part, so it can also be applied to the detection of gases having absorption bands at high wavelengths. The region where the light source 2 emits infrared rays is highly accurately patterned on the plane of the Si substrate of the membrane M, and thus, the individual variation in the radiation direction is very small. Therefore, variations in the amount of light received when a sensor module is configured with the light source 2 are reduced, and this contributes to an improvement in product yield. In addition, the light source 2 is produced in bulk using MEMS technology based on silicon wafers, and this is excellent in mass productivity.

The light source 2 is a surface mounted component that is directly mounted on the substrate 6 (COB: Chip On Board). However, the light source 2 is not limited thereto, and may be a DIP (Dual Inline Package) component (such as a CAN-package).

As shown in FIG. 1, the optical filter 3 is a filter provided so as to cover a light receiving surface of the light receiver 4, and transmits light (infrared rays) with a wavelength range (band) corresponding to the absorption wavelength specific to the gas G as the detection target. As described above, the transmission wavelength of the optical filter 3 is designed to match the unique absorption wavelength of the gas G as the detection target. With this, changes in the amount of light due to gases other than the gas G as the detection target is suppressed, and the SN ratio of the detection signal of the light receiver 4 is improved. More specifically, the optical filter 3 filters the infrared rays having a wide wavelength range incident from the light source 2 and passing the gas G, and transmits infrared rays in a wavelength range corresponding to an absorption wavelength of the gas G. In addition to the band-pass filter for transmitting only the wavelength of the specific frequency band, the optical filter 3 may be a long-pass filter for transmitting the infrared band of the wavelength band corresponding to the absorption wavelength of the gas G as the transmission wavelength of the cut-on wavelength or more. The long pass filter is a filter that cuts the light of the short wavelength side than a specific cut-on wavelength, and that transmits the light of the long wavelength side.

The optical filter 3 includes, for example, a silicon substrate as a substrate, and a dielectric multilayer film, or a multilayer film formed by an infrared transmission material such as Si, Ge, sulfide and fluoride. The silicon substrate is a planar silicon substrate. The material of the substrate is not limited to silicon, and Ge (germanium), quartz, alumina, BaF2 (barium fluoride), CaF2 (calcium fluoride) and the like can be used. The multilayer film is a film in the form of a plurality of layers provided on both sides of the silicon substrate. Although the planar shape of the optical filter 3 is circular, the shape is not limited to this, and the shape may be other shapes such as a rectangle.

The light receiver 4 is a thermopile-type optical sensor (infrared sensor) that is mounted on a +z side plane of the substrate 6 and that includes a plurality of thermocouples. The light receiver 4 detects the amount of incident infrared rays and outputs a detection signal as an analog electrical signal. However, the light receiver 4 is not limited to the thermopile type infrared sensor, and may be an infrared sensor of various types shown in the following table 1.

### [Table 1]

**TABLE 1**

| OPERATION PRINCIPLE | | | SENSED WAVELENGTH | ELEMENT MATERIAL |
|---|---|---|---|---|
| QUANTUM TYPE (COOL TYPE) | EXTERNAL PHOTOELECTRIC EFFECT | PHOTOELECTRIC TUBE | ULTRAVIOLET RAYS -9 [µm] | SILVER CESIUM OXIDE (Ag-O-Cs) |
| | | | | GALLIUM ARSENIDE CESIUM (GaAs-Cs) |
| | INTERNAL PHOTOELECTRIC EFFECT | LIGHT TRANSMITTANCE TYPE | 3-5 [µm] | CADMIUM TELLURIDE MERCURY (HgCdTe) |
| | | | | INDIUM ANTIMONIDE (InSb) |
| | | | 8-12 [µm] | CADMIUM TELLURIDE MERCURY (HgCdTe) |
| | | | | GALLIUM ARSENIDE (GaAs) |
| | | | | ALUMINUM GALLIUM ARSENIDE (AlGaAs) |
| | | | | QUANTUM WELL INFRARED |
| | | | | PHOTODETECTOR ELEMENT (QWIP) |
| | | PHOTOVOLTAIC TYPE | 3-5 [µm] | PLATINUM SILICON (PrSi) |
| | | | | INDIUM ANTIMONIDE (InSb) |
| | | | 8-12 [µm] | CADMIUM TELLURIDE MERCURY (HgCdTe) |
| | | | | SILICON GERMANIUM (GeSi) |
| HEAT TYPE (NON-COOL TYPE) | PYROELECTRIC EFFECT | PYROELECTRIC ELEMENT TYPE | 1-3 [µm] | LEAD SULFIDE (PbS) |
| | | | 8-12 [µm] | BARIUM STRONTIUM TITANATE (BST) |
| | | | | LEAD ZIRCONATE TITANATE (PZT) |
| | THERMOELECTRIC EFFECT | THERMOCOUPLE TYPE | | POLYCRYSTAL SILICON (Poly-Si) |
| | CHANGE EFFECT OF ELECTRIC RESISTOR DUE TO TEMPERATURE | BOLOMETER TYPE | | VANADIUM OXIDE (VOx) |
| | | | | GIANT MAGNETORESISTIVE EFFECT (CMR) |
| | | | | YTTRIUM BARIUM COPPER OXIDE (YBCO) |
| | | | | AMORPHOUS SILICON (a-Si) |

Further, the light receiver 4 is, for example, an infrared sensor of a CAN package, but the configuration is not limited to this.

The signal processor 5 is mounted on a planar region other than the optical cover 1 on the +z side of the surface of the substrate 6, and is an AFE (Analog Front End) - IC (Integrated Circuit) as an electronic component (processor) for signal processing relating to the detection signal of the light receiver 4. The signal processor 5 amplifies the analog detection signal of the light receiver 4 and performs AD conversion. Then, the signal processor 5 generates a difference value from the detection value when the light source 2 is on to the detection value when the light source 2 is off. The signal processor 5 performs correction of the difference value of the detection value due to the temperature and the individual variations of the optical gas sensor device 100, and generates various state signals from the difference value of the digital detection value. The signal processor 5 outputs the difference value of the digital detection value and the state signal.

The substrate 6 is a PCB (Printed Circuit Board) in which conductor wiring is printed on a board made of glass epoxy resin or the like. On the +z side plane of the substrate 6, the optical cover 1, the light source 2, the light receiver 4, the signal processor 5, the connector 7, and the circuit element 8 are mounted. A +z side surface of the substrate 6 is substantially parallel to the optical filter 3 and the light receiving surface of the light receiver 4.

The connector 7 is a connector mounted on a plane region other than the optical cover 1 and the signal processor 5 on the +z side surface of the substrate 6 and outputs various digital signals output from the signal processor 5 to the information processor (MCU 200) of the apparatus 230 (alarm) in a later stage. The connector 7 is connected to the MCU 200 of the apparatus 230 via a cable with a plug.

The circuit element 8 is a circuit element such as a switch (switch 81), a chip resistor, a chip capacitor, and the like.

Next, the optical path of infrared rays of the optical gas sensor device 100 will be explained. In the optical gas sensor device 100, the infrared rays emitted in the +z direction from the light source 2 is absorbed by the gas G as the detection target in the optical cover 1. The infrared rays, together with the absorption, is reflected in the ±x direction, ±y direction, and ±z direction on the inner surface of the optical cover 1, is filtered by the optical filter 3, and reaches and is incident to the light receiver 4. The optical path is a linear optical path on a plane or an optical path that is reflected on the inner surface of the optical cover 1 and bent. The inner surface of the optical cover may be planar, curved, or a combination thereof, or a three-dimensional drawn cross section may be a polygonal, circular, or elliptical pipe shape.

Next, a circuit configuration of the optical gas sensor device 100 will be described with reference to FIG. 4. FIG. 4 is a diagram illustrating a circuit configuration of an optical gas sensor device 100 and an apparatus 230.

As shown in FIG. 4, the optical gas sensor device 100 includes, as a circuit configuration, the light source 2, the light receiver 4, the signal processor 5, and the circuit element 8. The signal processor 5 includes an amplifier 50, a temperature sensor 511, a clock generator 512, a multiplexer 52, an AD (Analog to Digital) converter 53, a NVM (Non-Volatile Memory) 54, a data processor 55, a communicator 56, and a state output terminal 57. The circuit element 8 includes a switch 81, and resistors 82 and 83. The optical gas sensor device 100 is connected to the MCU 200 of the apparatus 230. The apparatus 230 includes the MCU 200, resistors 211 and 212, a capacitor 213, and a notifier 214.

The MCU 200 is a controller to control each unit of the apparatus 230 and includes a communicator 201. The communicators 56 and 201 are serial communicators that use the communication method of I2C. The communicator 56 of the optical gas sensor device 100 and the communicator 201 are connected by the connector 7 via a clock line SCL and a data line SDA. The communicator 201 generates a clock signal, outputs the clock signal to the communicator 56, and transmits and receives a data signal to the communicator 56. The communication method of the communicators 56 and 201 is not limited to IC2, and other serial communication methods can also be used such as UART (Universal Asynchronous Receiver/Transmitter) and CSI (Clocked Serial Interface), etc. The MCU 200 is connected to the state output terminal 57 through the signal line 220, and receives the state signal of the later-described optical gas sensor device 100 from the optical gas sensor device 100. The MCU 200 controls the notifier 214 based on the state signal of the optical gas sensor device 100. As described later, in accordance with the control of the MCU 200, the notifier 214 notifies the state of the optical gas sensor device 100 based on the state signal by display, sound output, etc.

The power supply of a power supply voltage VDD is connected to the clock line SCL (serial clock) through the resistor 211, is connected to the data line SDA (serial data) through the resistor 212, and is connected to the ground through the capacitor 213. The resistors 211 and 212 are pull-up resistors. The noise of the power supply voltage VDD is removed by the capacitor 213.

The light source 2 and the switch 81 are connected in series between the power supply of the power supply voltage VDD and the ground. The switch 81 is a switch for switching the light source 2 on and off. The switch 81 is constituted by an NMOSFET (N-channel Metal-Oxide-Semiconductor Field Effect Transistor) and CMOS (Complementary Metal-Oxide-Semiconductor), and a gate as a control terminal is connected to the signal processor 5. Further, the resistors 82 and 83 are connected in series between the power supply of the power supply voltage VDD and the ground. Nodes between the resistors 82 and 83 are connected to an input end of the light receiver 4. The power supply voltage divided by the resistors 82 and 83 is input to the input end of the light receiver 4. The light receiver 4 detects the gas G emitted from the light source 2 and the infrared rays IR input through the optical filter 3, and outputs an analog detection signal from the output end.

The power supply voltage divided by the resistors 82 and 83 is input to the first input end of the amplifier 50. The output end of the light receiver 4 is connected to the second input end of the amplifier 50. The amplifier 50 amplifies the analog detection signal output from the light receiver 4 by using the input partial power supply voltage, and a detection signal input from the light receiver 4.

The output end of amplifier 50 is connected to one of a plurality of input ends of the multiplexer 52. The temperature sensor 511 is connected to one of the plurality of input ends of the multiplexer 52, detects the temperature inside the optical cover 1 to generate an analog temperature signal, and outputs the generated analog temperature signal to the input end of the multiplexer 52.

The clock generator 512 is a clock generating circuit. The clock generator 512 generates a digital clock signal and outputs the digital clock signal to the data processor 55. The data processor 55 acquires the current time based on the clock signal input from the clock generator 512. The clock generator 512 may be configured to be connected to the AD converter 53. In this case, the clock generator 512 may generate an analog clock signal and output the analog clock signal to the AD converter 53.

For example, in accordance with selection control of the signal from the data processor 55, the multiplexer 52 multiplexes an amplified analog detection signal input from the light receiver 4, an analog temperature signal input from the temperature sensor 511, and divided power supply voltage into one analog multiplexed signal and outputs the signal to the input end of the AD converter 53. The AD converter 53 converts the input multiplexed signal to a multiplexed signal of the digital detection signal of the light receiver 4, the digital temperature signal and the digital divided power supply voltage, and outputs the signal to the data processor 55.

The NVM 54 is a memory that stores the information in non-volatile. For example, the following are stored, a threshold value M1 of the difference value of the detection value when the light source is on and when the light source is off as described later, a threshold value A of the gas concentration value of the gas G, a threshold value N of the light source voltage value, the initial failure determination period, no determination period, and a correction coefficient. The threshold value M1 is a threshold value for judging a failure state and a normal state (not a failure state) of the optical gas sensor device 100, and is a threshold value of the lower limit of the detection difference value between when the light source is on and when the light source is off in a situation in which the gas G in the normal state is inside. The threshold value A is a threshold value for judging an alarm state and a normal state (not an alarm state) of the optical gas sensor device 100, and is a threshold value of the upper limit of the gas concentration value of the gas G in the normal state.

The threshold value N is a threshold value for judging the abnormal state and normal state (not abnormal state) of the voltage value applied to the light source 2 (light source voltage value), and is a threshold value of the upper limit of the light source voltage value of the normal state. The threshold value N is, for example, 3.3 [V].

The initial failure determination period is an amount of standby time until the end of the failure determination of the initial state after the power on of the optical gas sensor device 100, for example, 2 [sec] preset empirically and experimentally. The no determination period is an amount of standby time for stabilizing the later described difference value of the detection value of the detection signal of the light receiver 4 after the initial failure determination of the optical gas sensor device 100, for example, 38 [sec] preset empirically and experimentally. The correction coefficient is a correction coefficient for performing correction processing such as temperature correction, correction of individual variations of the optical gas sensor device 100, etc. on the detection value of the light receiver 4.

The data processor 55 is a controller body (processor) for performing signal processing relating to the detection signal of the light receiver 4, and includes, for example, CPU (Central Processing Unit), RAM (Random Access Memory), and a storage. The CPU controls the optical gas sensor device 100. The RAM is a volatile memory that temporarily stores information. The storage is configured of a non-volatile memory (NVM: Non-Volatile Memory) such as a ROM (Read Only Memory), and various types of data and programs are stored. The storage may be configured to use the NVM54 which is a non-volatile memory provided separately from the data processor 55. As the NVM54, the mask ROM, EPROM (Erasable Programmable Read Only Memory), EEPROM (Electrically Erasable Programmable Read Only Memory), and the flash memory can be used. Specifically, in the data processor 55, the CPU reads out the program stored in the storage and deploys the program in the RAM. The various processing is performed in coordination with the deployed program. The storage is to store a state signal generation program for executing the gas concentration measuring processing to be described later.

The data processor 55 calculates the gas concentration value of the gas G by using the digital detection signal of the light receiver 4 and the digital temperature signal which are input from the multiplexer 52 and the correction coefficient stored in the NVM 54. The data processor 55 generates various state signals (later-described failure signal, alarm signal, and monitoring signal) of the optical gas sensor device 100 in response to the comparison and the correction of the calculated gas concentration value and the light source voltage value, with the threshold value stored in the NVM 54. The data processor 55 transmits the gas concentration value through the communicator 56 to the MCU 200 of the apparatus 230. The data processor 55 transmits the state signal of the optical gas sensor device 100 to the MCU 200 based on a predetermined format via the state output terminal 57. The data processor 55 may be configured by a circuit such as a FPGA (Field Programmable Gate Array), a ASIC (Application Specific Integrated Circuit), and the like.

The communicator 56 transmits and receives a data signal (such as a gas concentration value) to and from the communicator 201 via the data line SDA.

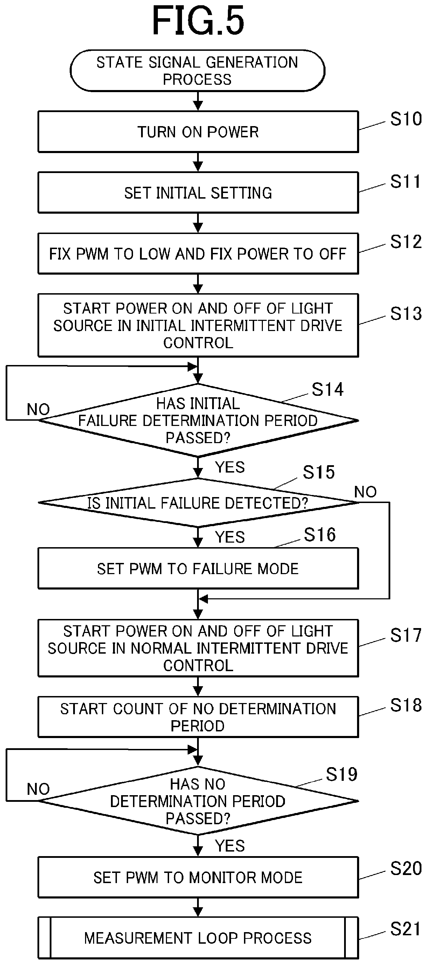

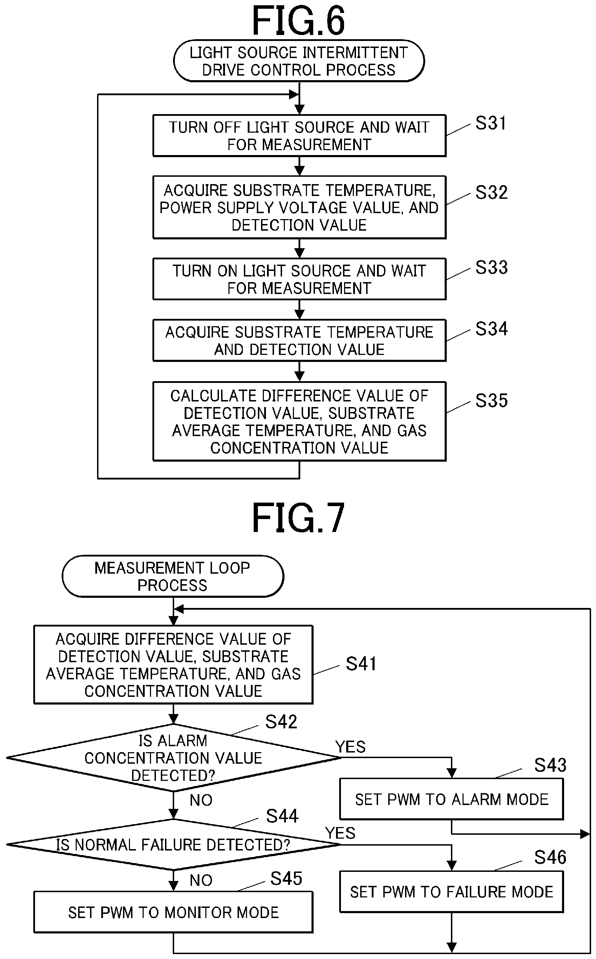

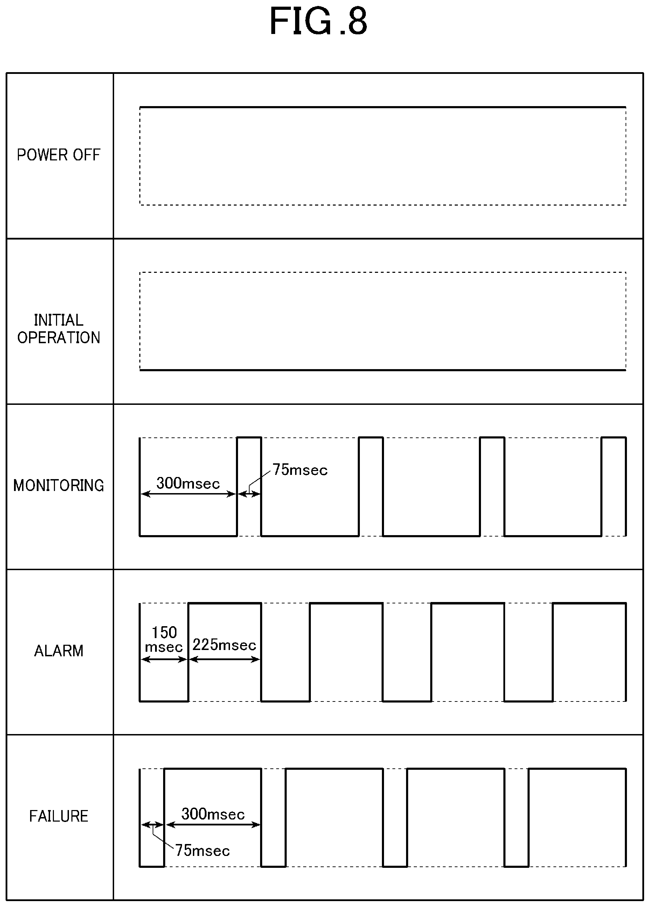

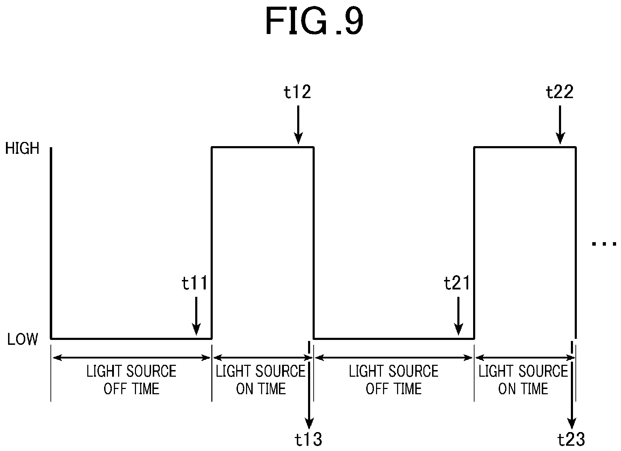

Next, with reference to FIG. 5 to FIG. 9, as the operation of the optical gas sensor device 100, the operation of the data processor 55 of the signal processor 5 is described. FIG. 5 is a flowchart illustrating a state signal generation process. FIG. 6 is a flowchart illustrating a light source intermittent drive control process. FIG. 7 is a flowchart illustrating a measurement loop process of the state signal generation process shown in FIG. 5. FIG. 8 is a diagram illustrating a waveform of a state signal. FIG. 9 is a diagram illustrating various timings of an on/off waveform of the light source 2.

A state in which the optical gas sensor device 100 is connected to the MCU 200 of the apparatus 230, and the gas G as the detection target is introduced into the optical cover 1 from the gas introduction port 11 is set. The power of the optical gas sensor device 100 is turned off. As shown in the waveform of the state signal of "power off" in FIG. 8, the output (state signal) from the state output terminal 57 of the signal processor 5 is always high. However, the state signal of the "power off" is always high when the pull-up resistor (not shown) of the signal line 220 of the apparatus 230 to which the optical gas sensor device 100 is connected is on.

Then, the data processor 55 of the signal processor 5 executes the state signal generation process in accordance with the state signal generation program stored in the internal storage triggered by the user's input of the power supply of the optical gas sensor device 100 (step S10).

First, the data processor 55 performs initialization of the signal processor 5, and performs preparation of driving the signal processor 5 (step S11). Then, the data processor 55 fixes the PWM (Pulse Width Modulation) of the output state signal to be low, and controls the switch 81 to fix the light source 2 to off (step S12). In step S12, as shown in the waveform of the state signal in the "initial operation" shown in FIG. 8, the signal is always set to low.

The data processor 55 then reads the initial failure determination period stored in the NVM 81. Based on the clock signal generated from the clock generator 512, the data processor 55 controls the switch 81 and starts initial light source intermittent drive control of on and off of the light source 2 (step S13) . After step S13, in parallel with the state signal generation process, the light source intermittent drive control process shown in FIG. 6 is executed. Further, the initial light source intermittent drive control is intermittent drive control of a repeated pattern such as setting the amount of time that the light source is off to 200 [ms] and the amount of time that the light source is on to 200 [ms] in the waveform as shown in FIG. 9 indicating the waveform of the amount of time that the light source is off (no light emitting) and the amount of time that the light source is on (light emitting) in the intermittent drive control of the light source 2.

Referring now to FIG. 6, a light source intermittent drive control process is described. First, the data processor 55 controls the switch 81 and turns off the light source 2. Based on the clock signal generated from the clock generator 512, the data processor 55 waits for measurement of the detection value of the light receiver 4 when the light source is off, the substrate temperature, and the voltage value of the light source 2 (step S31). As shown in FIG. 9, in the intermittent drive control of the light source 2, at the time of day t11 (, t21, and so on) as the timing of the last amount of time that the light source is on (before rising), the detection value of the detection signal of the light receiver 4 when the light source is off, the substrate temperature of the substrate 6 by the temperature sensor 511, and the light source voltage value of the light source 2 are measured. That is, in step S31, the data processor 55 stands by from the start of the amount of time that the light source is off to the time of day of the measurement timing of the last measurement value. The amount of standby time of step S31 corresponding to the initial intermittent drive control of step S13, for example, is 200 [ms].

Then, the data processor 55 acquires the detection value from the detection signal of the light receiver 4, acquires the substrate temperature from the temperature sensor 511, and acquires the divided power supply voltage between the resistors 82 and 83. Further, the data processor 55 calculates the voltage value to be applied to the light source 2 from the divided power supply voltage as the light source voltage value, and measures the detection value, the substrate temperature and the light source voltage value when the light source is off (step S32).

Then, the data processor 55 controls the switch 81 and turns on the light source 2. Based on the clock signal generated from the clock generator 512, the data processor 55 waits for measurement of the detection value of the light receiver 4, the substrate temperature, and the voltage value of the light source 2 when the light source is on (step S33). As shown in FIG. 9, in the intermittent drive control of the light source 2, at the time of day t12 (, t22, and so on) as the timing of the last amount of time that the light source is off (before falling), the detection value of the light receiver 4 when the light source is off, and the substrate temperature of the substrate 6 by the temperature sensor 511 are measured. That is, in step S33, the data processor 55 stands by from the start of the amount of time that the light source is on to the time of day of the measurement timing of the last measurement value. The amount of standby time of step S33 corresponding to the initial failure determination period of step S13, for example, is 200 [ms].

Then, the data processor 55 acquires the detection value from the detection signal of the light receiver 4, acquires the substrate temperature from the temperature sensor 511, and measures the detection value and the substrate temperature when the light source is on (step S34). In step S34, similarly to step S32, the data processor 55 may be configured to measure the voltage value (light source voltage value) applied to the light source 2.

Then, the data processor 55 reads the correction coefficient from the NVM54, and uses the detection value and the substrate temperature when the light source is off and the light source is on measured in steps S32 and S34, and the read correction coefficient to calculate the difference value of the detection value, the substrate average temperature and the gas concentration value (step S35). The process proceeds to step S31. As shown in FIG. 9, step S35 is executed at the time of day t13 (, t23 and so on) immediately after the time of day t12 (, t22 and so on) of step S34.

Here, the process of step S35 will be described in more detail. First, the data processor 55 subtracts the detection value when light source is off acquired in step S32 from the detection value when the light source is on acquired in step S34, and calculates the difference value of the detection value of the light receiver 4. Then, the data processor 55 calculates the average value of the substrate temperature when the light source is off measured in step S32, and the substrate temperature when the light source is on measured in step S34 and calculates the substrate average temperature. The data processor 55 calculates the gas concentration value using the calculated difference value of the detection value, the calculated substrate average temperature and the correction coefficient. The data processor 55 transmits the calculated gas concentration value through the communicator 56 to the MCU 200 of the apparatus 230.

Returning to FIG. 5, based on the clock signal generated from the clock generator 512, the data processor 55 judges whether the initial failure determination period read in step S13 has elapsed from the start of light source turned off (step S14). If the initial failure determination period has not elapsed (step S14; NO), the process proceeds to step S14.

If the initial failure determination period has elapsed (step S14; YES), the data processor 55 reads the predetermined failure conditions from the NVM54. Further, the data processor 55 judges whether to detect the initial failure of the optical gas sensor device 100 by determining whether the light source voltage value acquired in step S32 of the initial intermittent drive control, and the difference value of the detection value when the light source is on and when the light source is off calculated in step S35 satisfy the read predetermined failure conditions (step S15). The predetermined failure conditions include, for example, as a threshold value of failure occurrence, the threshold value M1 of the difference value between the detection value when the light source is on and when the light source is off, and the threshold value N of the light source voltage value.

In step S15, it is determined whether initial failure occurred in the optical gas sensor device 100 by whether the difference value of the detection value when the light source is on and when the light source is off calculated in step S35 < M1, and whether the light source voltage value acquired in step S32 ≥ N.

If an initial failure is detected (step S15; YES), the data processor 55 sets the output state signal to the PWM of the failure mode and sets the signal to a failure signal (step S16). In step S16, the state signal of the PWM of "failure" shown in FIG. 8 is generated as the failure signal and the signal is output to the apparatus 230. For example, the failure signal is an intermittent signal with a low period of 75 [msec], a high period of 300 [msec], and a duty ratio of 800. When the MCU 200 of the apparatus 230 receives the failure signal from the signal processor 5 via the signal line 220, the MCU 200 outputs the state of failure of the optical gas sensor device 100 to the notifier 214.

The data processor 55 then reads the no determination period stored in the NVM 81. Based on the clock signal generated from the clock generator 512, the data processor 55 controls the switch 81 and starts normal intermittent drive control of on and off of the light source 2 (step S17). After step S17, in the light source intermittent drive control being executed in parallel with the state signal generation processing, on/off interval of the normal intermittent drive control process is applied to steps S31 and S33. The light source intermittent drive control is intermittent drive control of a repeated pattern such as setting the amount of time that the light source is off to 750 [msec] and the amount of time that the light source is on to 250 [msec] in the waveform as shown in FIG. 9 indicating the waveform of the amount of time that the light source is off and the amount of time that the light source is on in the intermittent drive control of the light source 2.

Then, based on the clock signal generated from the clock generator 512, the data processor 55 starts counting the no determination period, and stops the output of the state signal (step S18). The no determination period is a standby period until the gas concentration value is stabilized. The output of the gas concentration value and the state signal is stopped because the gas concentration value is not stable. Then, based on the clock signal generated from the clock generator 512, the data processor 55 judges whether the no determination period has elapsed from the start of the count in step S18 (step S19). If the no determination period has not elapsed (step S19; NO), the process proceeds to step S19.

If it is determined that the no determination period has passed (step S19; YES), the data processor 55 sets the output state signal to the PWM of a monitor mode and sets the signal to the monitoring signal (step S20). In step S20, the state signal of the PWM of "monitoring" shown in FIG. 8 is generated as the monitoring signal and the signal is output to the apparatus 230. For example, the monitoring signal is an intermittent signal with a low period of 300 [msec], a high period of 75 [msec], and a duty ratio of 20%.

Then, the data processor 55 executes the measurement loop process (step S21). Here, a measurement loop process of step S21 will be described with reference to FIG. 7. As shown in FIG. 7, first, the data processor 55 acquires the difference value of the detection value of the light receiver 4, the substrate average temperature and the gas concentration value (step S41). Step S41 is a step that acquires the difference value of the detection value of the light receiver 4, the substrate average temperature and the gas concentration value calculated in step S35 which was performed immediately before in the light source intermittent drive control process.

The data processor 55 reads the threshold value A of a predetermined alarm determination from the NVM54, and determines whether to detect if the alarm concentration value is a gas concentration value requiring an alarm by judging if the gas concentration value acquired in step S41> A (step S42) . If the alarm concentration value is detected (step S42; YES), the data processor 55 sets the output state signal to the PWM of the alarm mode and sets the signal to the alarm signal (step S43). In step S43, the state signal of the PWM of "alarm" shown in FIG. 8 is generated as the alarm signal and the signal is output to the apparatus 230. For example, the alarm signal is an intermittent signal with a low period of 150 [msec], a high period of 225 [msec] , and a duty ratio of 60%. When the MCU 200 of the apparatus 230 receives the alarm signal from the signal processor 5 via the signal line 220, the MCU 200 outputs an alarm showing that the gas concentration value is high to the notifier 214. The process proceeds to step S41.

If the alarm concentration value is not detected (step S42; NO), the data processor 55 reads the predetermined failure conditions from the NVM54. Further, the data processor 55 judges whether to detect the failure of the optical gas sensor device 100 at normal times (normal failure) by determining whether the light source voltage value acquired in step S41 of the normal intermittent drive control, and the difference value of the detection value when the light source is on and when the light source is off acquired in step S41 satisfy the read predetermined failure conditions (step S44). The predetermined failure conditions include, for example, as a threshold value of failure occurrence, the threshold value M1 of the difference value between the detection value when the light source is on and when the light source is off, and the threshold value N of the light source voltage value.

In step S44, similar to step S15 in the initial failure determination, it is determined whether normal failure occurred in the optical gas sensor device 100 by determining whether the difference value of the detection value when the light source is on and when the light source is off acquired in step S41 < M1, and whether the light source voltage value acquired in step S41 ≥ N. However, it is not limited thereto, and the failure determination method of the initial failure determination (failure condition, etc.) and the failure determination method of the normal failure determination (failure condition, etc.) may be different configurations.

If it is determined that the normal failure is not detected (step S44; NO), the data processor 55 sets the output state signal to the PWM of the monitor mode and sets the signal to the monitoring signal (step S45). Step S45 is the same as in step S20. The process proceeds to step S41.

If the normal failure is detected (step S44; YES), the data processor 55 sets the output state signal to the PWM of the failure mode and sets the signal to a failure signal (step S46). Step S46 is the same as in step S16. The process proceeds to step S41.

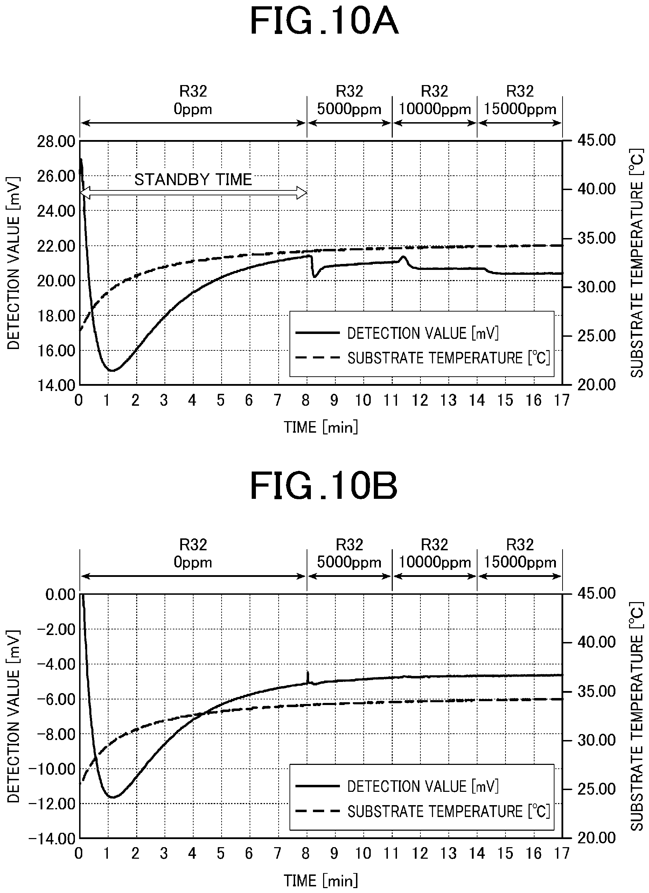

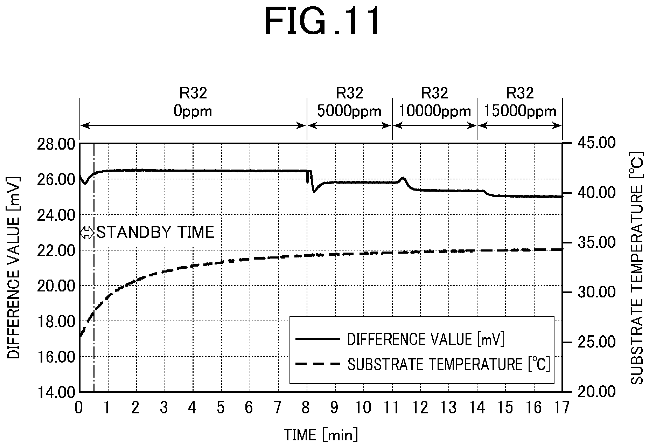

Next, a specific example of gas concentration value detection will be described with reference to FIG. 10A to FIG. 11. FIG. 10A is a diagram showing amount of time characteristics of a detection value when the light source is turned on. FIG. 10B is a diagram showing amount of time characteristics of a detection value when the light source is turned off. FIG. 11 is a diagram showing amount of time characteristics of a difference value of a detection value.

As shown in FIG. 10A, from 0 (light source control start time) to 8 [min], the gas of R32 is not introduced in the space where the optical gas sensor device 100 is installed, and the gas concentration value of R32 in the optical cover 1 is 0 [ppm] . Similarly, from 8 to 11 [min], the gas of R32 is introduced into the space, and the gas concentration value of R32 in the optical cover 1 is 5000 [ppm]. Similarly, from 11 to 14 [min], the gas of R32 is further introduced into the space, and the gas concentration value of R32 in the optical cover 1 is 10000 [ppm]. Similarly, from 14 to 17 [min], the gas of R32 is further introduced into the space, and the gas concentration value of R32 in the optical cover 1 is 15000 [ppm] .

In FIG. 10A, in the state of the gas of R32 as described above, the detection value of the light receiver 4 when the light source is on (light emitting) with relation to the amount of time is indicated by a solid line, and the substrate temperature [°C] with relation to the amount of time is indicated by a dotted line. The characteristic curve of the substrate temperature [°C] with relation to the amount of time is common in FIG. 10A to FIG. 11.

FIG. 10B shows the detection value of the light receiver 4 when the light source is off (no light emitting) with relation to the amount of time in solid lines. Further, in FIG. 11, in the state of the gas of R32 as described above, the difference value of the detection value of the light receiver 4 with relation to amount of time (the detection value when the light source is on - the detection value when the light source is off) is shown by a solid line.

The detection value may vary due to the rapid change in the substrate temperature, and there is a possibility that the light receiver 4 as an infrared sensor cannot sufficiently read the infrared rays. Specifically, as shown in FIG. 10A, in order to calculate the gas concentration value from the detection value when the light source is on, it is necessary to wait for more than 8 minutes as an amount of standby time from the start of the optical gas sensor device 100 until the rise in the substrate temperature becomes stable. Specifically, in the optical gas sensor device 100, since the light source 2 and the light receiver 4 are mounted on the same substrate 6, the heat generated by the light source 2 is easily conducted to the light receiver 4 via the substrate 6, and the detection value of the light receiver 4 is likely to become unstable.

In contrast, as shown in FIG. 11, according to the configuration taking the difference value of the detection value when the light source is on and the light source is off, the difference value of the detection value is stabilized in a short amount of time, and it is possible to shorten the amount of standby time to about 30 [seconds].

As described above, according to the present embodiment, the optical gas sensor device 100 includes, the light source 2, the optical filter 3, the light receiver 4, the substrate 6, and the signal processor 5. The light source 2 emits infrared rays to the gas G as the detection target. The optical filter 3 transmits the infrared rays with the wavelength corresponding to the absorption wavelength of the gas G as the detection target. The light receiver 4 detects the infrared rays incident through the optical filter 3 and generates a detection signal. The light source 2 and the light receiver 4 are mounted on the substrate 6. The signal processor 5 intermittently drives and controls the on / off of the light source 2, and calculates the gas concentration value of the gas G as the detection target from the difference value obtained by subtracting the detection value of the detection signal when the light source 2 is off from the detection value of the detection signal when the light source 2 is on. Therefore, in a configuration in which the light source 2 and the light receiver 4 are mounted on the same substrate 6, and the light receiver 4 is susceptible to the heat of the light source 2, the variation of the detection signal of the gas G based on the change in the substrate temperature can be suppressed, and it is possible to stabilize the gas concentration value. Moreover, the amount of time from the start to the measurement of the normal gas concentration value can be shortened.

The optical gas sensor device 100 includes a temperature sensor 511 for detecting the substrate temperature of the substrate 6. The signal processor 5 calculates the gas concentration value from the substrate temperature and the difference value of the detection value of the light receiver 4. More specifically, the temperature sensor 511 detects the substrate temperature when the light source is on and the substrate temperature when the light source is off. The signal processor 5 calculates the substrate average temperature which is an average value of the substrate temperature when the light source 2 is on and the substrate temperature when the light source 2 is off, and calculates the gas concentration value from the substrate average temperature and the difference value of the detection value of the light receiver 4. Therefore, it is possible to calculate the stable gas concentration value by suppressing the influence of the substrate temperature difference between when the light source 2 is on and when the light source 2 is off.

Further, the light source 2 is a MEMS type light source. Therefore, it is possible to make the amount of response time short, and it is possible to reduce the power consumption of the optical gas sensor device 100.

Further, the optical gas sensor device 100 includes the optical cover 1 and the gas introduction port 11. The optical cover 1 is provided on the substrate 6 so as to cover the light source 2 and the light receiver 4. The infrared rays passing through the optical filter 3 is reflected on the inner surface of the optical cover 1. The optical cover 1 is provided so that at least a portion of the reflected light reaches the light receiver 4. The gas introduction port 11 introduces the gas G as the detection target inside the optical cover 1. Therefore, it is possible to accurately detect the gas concentration value of the gas G in the optical cover 1.

Further, the signal processor 5 determines the failure in the optical gas sensor device 100 when the difference value of the detection value when the light source is on and when the light source is off is lower than the threshold value M1 as a predetermined first threshold value, and the light source voltage value to be applied to the light source 2 is the threshold value N or more as a predetermined second threshold value. Therefore, it is possible to accurately determine the failure of the optical gas sensor device 100.

The signal processor 5 determines the state of the optical gas sensor device 100 from the gas concentration value, and outputs the state signal of the determined state to the external apparatus 230. Therefore, it is possible to output to the apparatus 230 the state signal of the optical gas sensor device 100 based on a stable and accurate gas concentration value.

The description of the above-described embodiments and modification are examples of the optical gas sensor device, the gas sensing method, and storage medium according to the present invention, but the present invention is not limited to the above.

For example, in the above embodiment, in step S35 of the light source intermittent driving process, the data processor 55 calculates the difference value of the detection value when the light source 2 is on and when the light source 2 is off. However, it is not limited to this configuration. For example, instead of "the difference value of the detection value when the light source 2 is on and when the light source 2 is off", the data processor 55 may be configured to calculate "a second difference value obtained by subtracting the amount of change in the detection value of two consecutive times when the light source is off from the first difference value of the detection value when the light source 2 is on and when the light source 2 is off. According to this configuration, it is possible to accelerate the stabilization of the second difference value than the first difference value, and it is possible to further shorten the amount of standby time in FIG. 11. The data processor 55 may calculate the gas concentration value using the calculated second difference value of the detection value, the calculated substrate average temperature and the correction coefficient.

Further, in the above embodiment, the data processor 55 calculates the gas concentration value, and generates a state signal by comparison or the like with various threshold values, but the configuration is not limited thereto. The data processor 55 may be configured to calculate a value corresponding to the gas concentration value and generate a state signal by comparing the value corresponding to the gas concentration value with various threshold values corresponding thereto.

According to the above embodiments, the optical gas sensor device 100 includes one set of a set including the light source 2, the optical filter 3, and the light receiver 4, but the present invention is not limited to this. The optical gas sensor device may include a plurality of sets of light sources 2, optical filters 3, and light receivers 4.

In addition, the detailed configuration and detailed operation of the optical gas sensor device 100 in the above-described embodiments can be changed as appropriate without departing from the spirit of the present invention.

## Claims

1. An optical gas sensor device comprising:
a light source that emits an infrared ray to a gas as a detection target;
an optical filter that transmits the infrared ray with a wavelength corresponding to an absorption wavelength of the gas as the detection target;
a light receiver that generates a detection signal by detecting the infrared ray incident through the optical filter;
a substrate on which the light source and the light receiver are mounted; and
a signal processor that intermittently drives and controls on and off of the light source, and calculates a gas concentration value of the gas as the detection target from a difference value acquired by subtracting a detection value of the detection signal when the light source is off from the detection value of the detection signal when the light source is on.

2. The optical gas sensor device according to claim 1,
further comprising a temperature sensor that detects a substrate temperature of the substrate,
wherein the signal processor calculates the gas concentration value from the substrate temperature and the difference value.

3. The optical gas sensor device according to claim 2,
wherein the temperature sensor detects the substrate temperature when the light source is on and the substrate temperature when the light source is off, and
wherein the signal processor calculates a substrate average temperature which is an average value of the substrate temperature when the light source is on and the substrate temperature when the light source is off, and calculates the gas concentration value from the substrate average temperature and the difference value.

4. The optical gas sensor device according to claim 1, wherein the light source is a MEMS type light source.

5. The optical gas sensor device according to claim 1, further comprising,
an optical cover that is provided on the substrate so as to cover the light source and the light receiver, that reflects the infrared ray passing the optical filter on an inner surface of the cover, and that is provided so that at least some of the reflected light reaches the light receiver, and
a gas introducer that introduces gas as the detection target in the optical cover.

6. The optical gas sensor device according to claim 1,
wherein the signal processor determines that there is a failure in the optical gas sensor device in a case that the difference value acquired by subtracting the detection value of the detection signal when the light source is off from the detection value of the detection signal when the light source is on is lower than a predetermined first threshold value, and a voltage value applied to the light source is a predetermined second threshold value or more.

7. The optical gas sensor device according to claim 1, wherein the signal processor determines a state of the optical gas sensor device from the gas concentration value, and outputs a state signal of a determined state to an external apparatus.

8. A gas sensing method used in an optical gas sensor device including,
a light source that emits an infrared ray to a gas as a detection target;
an optical filter that transmits the infrared ray with a wavelength corresponding to an absorption wavelength of the gas as the detection target;
a light receiver that generates a detection signal by detecting the infrared ray incident through the optical filter; and
a substrate on which the light source and the light receiver are mounted,
the gas sensing method comprising:
signal processing that intermittently drives and controls on and off of the light source, and calculates a gas concentration value of the gas as the detection target from a difference value acquired by subtracting a detection value of the detection signal when the light source is off from the detection value of the detection signal when the light source is on.

9. A program for controlling a computer in an optical gas sensor device including,
a light source that emits an infrared ray to a gas as a detection target;
an optical filter that transmits the infrared ray with a wavelength corresponding to an absorption wavelength of the gas as the detection target;
a light receiver that generates a detection signal by detecting the infrared ray incident through the optical filter; and
a substrate on which the light source and the light receiver are mounted,
the program controlling the computer to function as,
a signal processor that intermittently drives and controls on and off of the light source, and calculates a gas concentration value of the gas as the detection target from a difference value acquired by subtracting a detection value of the detection signal when the light source is off from the detection value of the detection signal when the light source is on.
